# EUROPEAN PATENT APPLICATION

(11) **EP 3 885 931 A1**
(43) Date of publication of application: **29.09.2021**
(21) Application number: 20165660.0
(22) Date of filing: 25.03.2020
(51) Int. Cl.: G06F 16/33, G06F 21/62

(54) **METHOD TO CARRY OUT A RESEARCH IN A DATA BASE BASED ON AN INPUT DOCUMENT**

(71) Applicant: Elute Intelligence Holdings Limited, Tadley RG26 3AX (GB)
(72) Inventor: White, Matthew, Cambridge, CB23 4JD (GB); Woolls, David, West Midlands, B93 8DP (GB); Fischer, Peter Heinz, 82064 Straßlach (DE)
(74) Representative: Mathys & Squire

(57) **Abstract**

The present invention is related to a method to carry out a research in a database (DB) based on an input document (ID), comprising the following steps:
- Providing an input document (ID) with at least one text portion (TP),
- Pre-processing the provided input document (ID) to generate a list of research terms (LRT) based on the at least one text portion (TP),
- Sending the generated list of research terms (LRT) to the database (DB),
- Conducting the research in the database (DB) with the sent list of research terms (LRT),
- Preparing a research result (RR) based on the conducted research.

## Description

The present invention is related to a method to carry out a research in a database based on an input document, a computer program product comprising instructions to carry out such a method, a pre-processing module to be used in such a method as well as a research system to carry out a research in such a database.

It is known that based on input documents researches have to be carried out. One example to carry out such a research is the need to find state of the art documents for patent applications. Usually this is done by a manually conducted research in a respective document patent database. To conduct such a research it has to be carefully selected which research terms are used in what kind of combination to find respective relevant state of the art documents in the patent database. A similar research is also necessary, if an invention has been described in an invention record. In such a case the invention record comprises a description of the invention to be researched and once again manually a selection of research terms has to be created based on the content of the invention record.

Based on the manual research systems which are in place right now it is a disadvantage that researches need of a lot of time and effort as well as relying on the expertise of the researcher. Due to this it is time consuming to search for state of the art documents in a data base for patent applications as well as for invention records. Of course, a similar situation also applies to research objectives in different fields of technological background, for example in the field of chemistry, in the field of pharmacy or in the field of biology.

It is an object of the present invention to overcome the above mentioned disadvantages of the presently known methods at least in part. It is further an object of the present invention to provide a cost efficient and safe way to optimize timing and/or cost for carrying out document research in a database.

Aforesaid object of the invention is solved by a method according to claim 1, a computer program product according to claim 13, a pre-processing module according to claim 14 as well as a research system according to claim 15. Further details and advantages are described in the respective subclaims. Details described with respect to the subclaims in particular with respect to the method, the computer program product, the pre-processing module as well as the research system can be combined with each other freely.

The present invention is generally related to a method to carry out a research in a database. Such a research in the database shall be based on an input document. The method comprises the following steps:
- Providing an input document with at least one text portion,
- Pre-processing the provided input document to generate a list of research terms based on the at least one text portion,
- sending the generated list of research terms to the database,
- conducting the research in the database with the sent list of research terms,
- preparing a research result based on the conducted research.

The present invention in general is related to several steps to automatically or at least partly automatically carry out the database research. As commonly known the start of the research is an input document. In the field of patent applications such an input document can for example be a patent specification or an invention record. It is also possible to have any other technical description for a scientific content which has to be researched for a state of the art.

A core idea of the present invention is to carry out a pre-processing step based on the text portion of the input document. The input document for example can be provided in a machine-readable manner. For example, the input document can be provided as a word document, as a PDF document, in particular as a PDF document with OCR functionality.

Based on the text portion in the input document the pre-processing step can generate a list of research terms. This step is in particular carried out based on a linguistic correlation. This has to be understood as an automatic or at least partly automatic generation from the input document to the list of research terms. For example, the pre-processing can read the text portion automatically and for example count the number of words with the specific content. A linguistic approach in particular neglects words like "and", "or" or the like. Such a linguistic approach for example is focused on content words which give additional information to the content of the input document. Based on that, in particular the list of terms can comprise the combination of two or more terms per line of the list of research terms.

Based on the previous paragraph this pre-processing step is described with respect to the following example. It is possible that the input document is related to a steam engine. This would lead to a text portion which would most likely comprise the words steam and the word engine as well as further words like, for example control, module or the like. For example, the text portion could comprise "with a steam engine and a control module". Based on a linguistic approach the pre-processing therefore would take the words steam, engine, control and module and would move them into the generated list of research terms. Each of the phrases above, in particular the words engine, steam, control and module, would be considered as research terms. Moreover, the list of research words could comprise more columns, for example two columns. Each of the lines of the list of research terms therefore combines two or more terms into a combined set of terms to be researched with. In the present example this would lead to a generated list of research terms comprising in a first line in the first column the words steam and this first line in the second column the word engine. The next line would comprise in the first column the word engine and in the second column the word control. One further line could comprise the word control in the first column and the word module in the second column.

It can be seen from the description above, that the pre-processing step excludes all the unnecessary information of the input document on the basis of a linguistic approach. This pre-processing step can be carried out automatically or at least partly automatically. Thereby, the list of research terms is an abstract of the information content of the input document which can in the next steps be used for conducting the research.

Based on the list of research terms, which reflects the technological content of the input document, this list of research terms is provided to the database and is the basis for conducting the research. This research can also be conducted based on a linguistic approach, namely by just searching the database for documents comprising a list of research terms in the specific priority and the specific combination as mentioned in the list of research terms. In the example mentioned above, the first line comprises the phrases steam and engine. Therefore, this first line would lead to a research to be conducted in the database to find any document comprising the combination of steam and engine. A further research is carried out in the database based on the second line of the list of research terms. The second line comprises the phrases engine and control. Therefore, the second research step is conducted in the database to find documents comprising the words engine and control in the selected combination. Of course, the list of research terms in particular the length of this list and the number of lines is strongly correlated with the length and the complexity of the input document, in particular to the text portion of the input document. As it can be derived from this complexity also a list of research terms with several hundreds of lines is possible.

It can be seen from the description above, that also the research can be conducted automatically or at least partly automatically. The preparation of the research result is based on the conducted research and for example gives a complete result list with all found documents. Of course, this results list of research results can comprise further information, for example the number of hits, the number of double hits, in particular the number for each of the research terms in the respective document. Moreover, as later described in more detail, a post-processing step can be applied to the research result, highlighting a specific document and prioritizing the different documents by comparing them to each other and/or to the list of research terms.

The possibility to carry out the pre-processing step as well as the research step automatically or at least partly automatically it is a core advantage of the present invention to increase security. In particular when the inventive method is applied to a patent system, for example to research non-published patent applications or even further critical non-published invention records, the unintended publication of the text portion has to be avoided by any means. Therefore, the inventive method provides additional security due to the pre-processing step. The pre-processing step allows the generation of a list of research terms which in turn allows the research of the database to be conducted. However, the list of research terms does not in itself allow the input document to be recreated and thereby the list of research terms cannot be considered to be a publication of the complete content of the input document. Based on that understanding, even a centralized research, for example in a cloud system, can be provided for the inventive method. It is completely sufficient to carry out a pre-processing step on a local device and following from that pre-processing step, the further steps can be conducted on a centralized cloud or network based device. That would lead to a situation where for example on a local device like a mobile phone or a local computer, the confidential input document can be selected. The pre-processing step could also be conducted on the local device thereby generating the list of research terms. This list of research terms, which is in particular not able to recreate the input document, can then be sent to a centralized entity, for example provided to a cloud based network. In particular also the database can be cloud based and the complete research can be conducted within the network and all within in the cloud system. Of course, the preparation of the research result can also be done in the cloud and thereby the computing power in a network device can be provided to the user of the local device.

It can be seen from the description above, that the advantage of automization of at least parts of the research method is combined with the high level of security by conducting a pre-processing step which still allows the automatic research but keeps the content of the input document secure from unintended disclosure.

It could be of advantage if according to the present invention that at least the pre-processing step is carried out on a local device. As already discussed above, this would lead to the possibility to increase security. The local device can for example be a mobile device of a user or a personal computer of a user. The local device is in particular local in contrast to a network device or a cloud device. There could be applied a security fence which is more or less established by the pre-processing step. This increased security is based on the fact that the pre-processing leads to a list of research terms which can not be reverse-engineered or decompiled to recreate the content of the input document.

Further advantages can be achieved if according to the present invention at least the step of conducting the search is carried out on a network device comprising the database. This is in particular combined with the embodiment of the paragraph above. Using a network device can in particular be understood as using a centralized device or a cloud device. For example, a server could be considered as a network device according to the present invention which for example also comprises the database and a central processing unit to conduct the research and/or to prepare the research result. Such a centralized server comes with all the advantages of centralized cloud computing but is adapted to security needs by the pre-processing step which is in particular carried out on the local device and not within the network device. This ensures that according to the present invention even for confidential content in the input document a centralized processing within the database and/or within a centralized cloud system can be applied because the pre-processing step increase security against unintended publication of the content of the input document.

According to the present invention further advantages could be achieved if the prepared research result is sent back from the database to a local device. Beside the possibility that the research result is used on the cloud system in particular on the network device, also a resend function, to send it back to the local device, is possible. Of course, it could be sent to the first local device on which the pre-processing has taken place and/or on a separate local device. Further a later described post-processing step can be conducted either on the network device or on the local device. For example, the input document could be set into a correlation with the research result and/or in correlation with the list of research terms.

Further advantages can be achieved if according to the present invention the step of pre-processing is non-reversible. The result of this is the increased security. Having a non-reversible pre-processing step leads to the increased security that a decompiling of the list of research terms to recreate the content of the input document is made impossible. The oneway pre-processing according to this embodiment increases the security even further and could be understood as one of the core ideas and core advantages of the present inventive method.

Further advantages could be achieved if according to the present invention the generated list of research terms is re-sorted before sending it to the database. As already mentioned, the generation of a list of research terms is carried out based on a linguistic approach and can also use the number of hits for specific words and phrases correlated with the technical and informative content of the input document. By resorting the different lines and keeping the correlation between the connected columns within the list of research terms the security can be further increased. The re-sorting can be done in a random manner as well as by any other resorting manner, for example by using alphabetic order or the like. The distance between the list of research terms and the input document can thereby be increased without losing the possibility to conduct the automatic research in the database based on that randomized or re-sorted list of research terms.

It is further of advantage according to the present invention, if the generated list of research terms is encrypted before sending it to the database. Carrying out an encryption method on the list of research terms increases security even further. For example, a secure or encrypted communication line, for example using the VPN or the like, could be used for this. Also, the encryption of the list of research terms itself could be used to increase the security for that communication step.

Further advantages could be achieved if, according to the present invention, the list of research terms comprises at least two columns of terms. Of course, also three, four or further columns could be used. Each column is used for one term meaning one phrase or one word. In the example mentioned above, the list of research terms would comprise two columns of terms which are arranged in lines. One can picture this list of research terms as a spread sheet or as a part of a spread sheet with columns for the terms and lines for the connections between the terms. Said lines can reach high numbers depending on the length and the complexity of the input document. The keep the automatization level as high as possible, the number of columns of terms is limited in particular to less than ten, preferably to less than five and in particular to exactly two and/or three columns of terms. Each line of terms is in particular treated as connected and the research will for example be carried out to find database entries that contain the same set of terms in the same order. Whilst describing the list of research terms as being like a spreadsheet, other methods of storing the list of research terms can be envisaged that achieve the same effect of identifying the relationship between two or more terms. Further advantages could be achieved if according to the present invention the pre-processing step comprises the possibility of multiple usage of terms for the generation of the list of research terms. Such multiple usage, for example like steam control and steam engine, lead to a further complexity and a better correlation to the input document by still keeping the automization possibility to conduct the research. It further leads to a high accuracy for preparing research results based on the linguistic approach discussed before.

Further advantages could be achieved if according to the present invention the pre-processing step comprises a consideration of a sequence of terms for the generation of the list of research terms. The sequence could be combined with the repeated usage according to the paragraph above. Increasing the number of columns of terms and maintaining the sequence of terms can help to improve the accuracy of the linguistic approach when carrying out research in the database. For example, a steam engine control could be one line and a steam control engine could form another line of the list of research terms. Whilst the terms are the same in the two lines, the different sequence makes the two lines linguistically very different leading to high accuracy for the research within the data base.

It is also of advantage that according to the present invention a post-processing step can be carried out on the prepared research result. Such a post-processing step can be carried out within the centralized network device as well as on a local device used by the user. Such a post-processing step can for example correlate the research result with the input document. It is also possible to post-process to highlight keywords in the context of each of the documents being part of the research result. Of course, also a further number of additional post-processing steps can be applied to the research result.

It is also of advantage that according to the present invention after the preparation of the research result a selection step is carried out for selecting specific portions of the research result to be downloaded from the database. To avoid a significant data traffic, the research result can be sent back to a local device in the form of a result list. After studying the list, the user on the local device can specifically select parts of the research result list, thereby selecting specific documents being part of the result list to be downloaded to the local device. This could be done parallel while reviewing or continuing to review the rest of the research result. That selection of specific portions could reduce the data traffic and thereby increase the speed to carry out in an inventive method which could be applied on the local device and on the centralized network device.

A further part of the present invention is a computer program product comprising instructions which, when the program is executed by a computer, cause the computer to carry out the steps of the present invention. Thereby an inventive computer program product comes with the same advantages as discussed in detail with respect to an inventive method.

A further part of the present invention is related to a pre-processing module to be used in an inventive method. Such a pre-processing module comprises pre-processing means to generate the list of research terms based on the at least one text portion in the input document. Thereby the pre-processing module, which for example could be part of a local device, brings the same advantages as discussed with respect to the inventive method.

A further part of the present invention is the research system to carry out a research in a database based on an input document. Such research system comprises an input module for providing the input document with at least one text portion. A pre-processing module is provided for the research system for pre-processing the provided input document to generate a list of research terms based on the at least one text portion. Further a sending module is provided for sending the generated list of terms to the database. With a conducting module of the research system the research can be conducted in the database with the sent list of research terms. Finally, a preparing module is provided for preparing a research result based on the conducted research. The input module, the pre-processing module, the sending module, the conducting module and/or the preparing module are in particular configured to carry out an inventive method. Thereby an inventive research system brings the same advantages as discussed in detail with respect to the inventive method. Of course, the research system can be applied to one single device or spread over separate devices. In particular the research system in each of the modules can be separated and located in a local device and at least partly in a centralized network device.

Based on the accompanying figures the present invention is discussed in more detail. The figures shown in an abstract manner:
- Figure 1: a part of the inventive method,
- Figure 2: a further part of the inventive method,
- Figure 3: a further part of the inventive method,
- Figure 4: a further part of the inventive method,
- Figure 5: a further part of the inventive method,
- Figure 6: a further part of the inventive method,
- Figure 7: an embodiment of an inventive research system and
- Figure 8: an embodiment of an inventive research system.

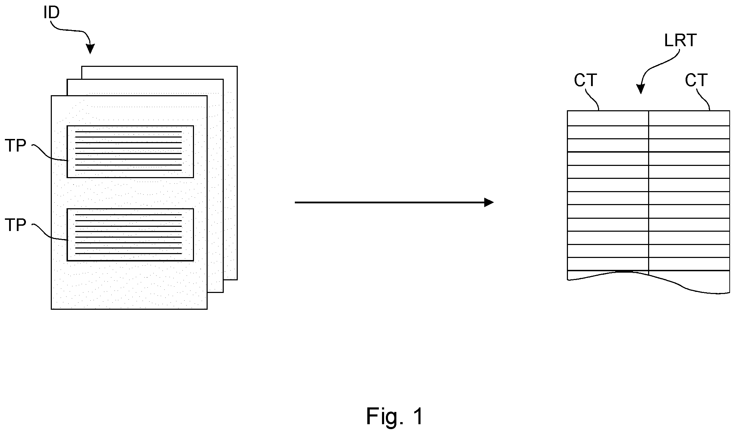

In figure 1 a first part of the inventive method is disclosed. The method starts from an input document ID, which comprises in this case by the way of examples three pages. The first page displayed comprises two text portions TP, which describe in a technical manner, for example an invention and thereby the input document ID could be described as an invention record in this example. In a first step this input document ID is pre-processed and by this pre-processing step linguistic approaches are used. This linguistic approach for example is reading each of the text portions TP of the input document ID and thereby can count the words being related with the content of the input document. If the input document ID is for example focused on a steam engine, it is likely that the words steam and engine are counted by the linguistic approach within the pre-processing step. As a result of the pre-processing step, a list of research terms LRT is provided as seen in figure 1. In this example the list of research terms LRT comprises two columns of terms CT. For example, in the first line in the first column the word steam and the second column the word engine could be provided. Due to the double usage possibility in one embodiment of the present invention in the second line in the first column once again the word steam could be found and in the second column in the same second line the word control could for example be found. This pre-processing step pre-processes the content of the input document ID into a list of research terms LRT thereby keeping the information to be used on conducting a later research by excluding the complete content of the input document ID. This step can in particular be done in a non-reversible manner.

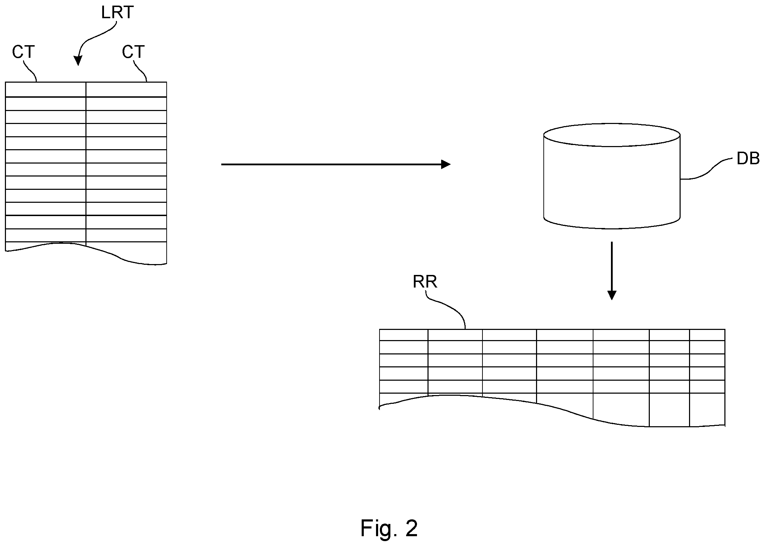

Based on the list of research terms LRT the research can be conducted. To do so, in figure 2 the list of research terms LRT is sent to the database DB and a research is conducted within the database DB. As a result of that research a research result RR is provided preferably in a list as displayed by the way of example in figure 2. Each line of that list can for example comprise the number of a document as well as some further information on the correlation to the research itself. Further details will follow later.

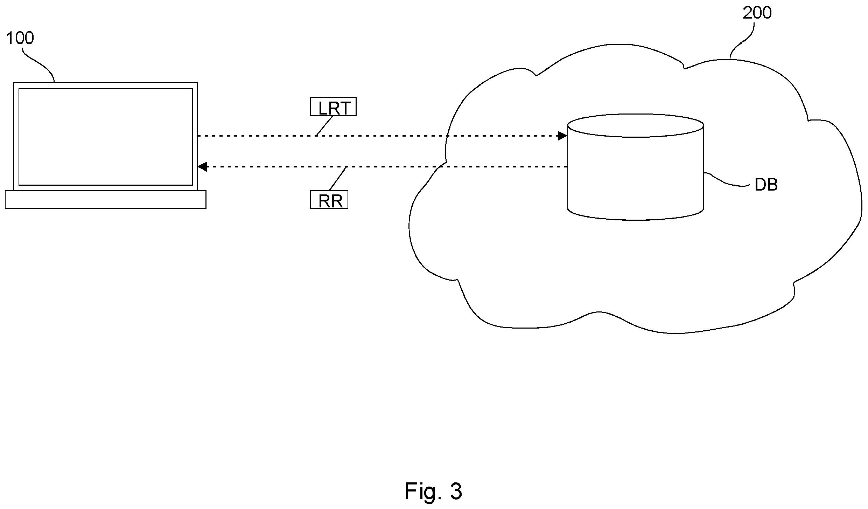

As it can be seen in figure 3 the method can be spread over separate devices. In particular a local device 100 is used to carry out the first steps in particular the pre-processing step. Then by a sending step the list of research terms LRT is sent to centralized cloud system in this case a network device 200 which comprises the database DB. Once again after conducting the research and preparing the research result RR this one is sent back to the local device 100 to the user of the local device.

As it can be derived from figure 3 the security is increased significantly because the input document ID itself and thereby each of its text portions TP never leave the local device 100. Beside that an automatic research can be conducted based on the list of research terms LRT which represents the content of the input document ID but is not equal to the input document ID. Thereby the ability to conduct a centralized automatic research is combined with high security issues for an input document ID never leaving the local device 100.

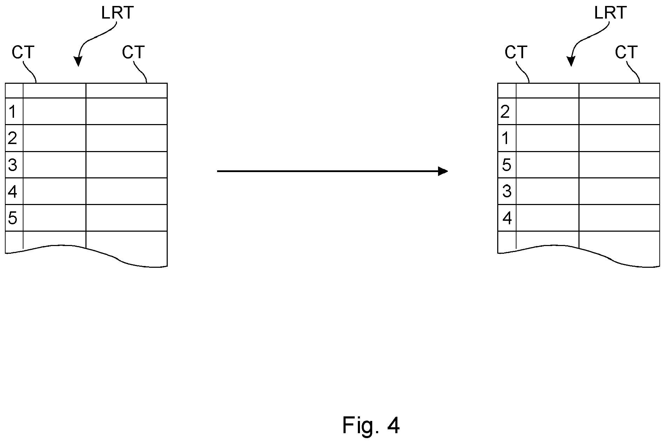

Figure 4 shows one example of a preferred embodiment of the present invention. To increase the distance between the list of research terms LRT and the input document ID a further re-sorting step can be carried out. In this case, for example an alphabetical or a randomised order resorting can be conducted on the list of research terms LRT and thereby mixing each of the lines by keeping the correlation of the terms within each of the lines. In figure 4 this can be seen by the re-sorted numbers in the first column.

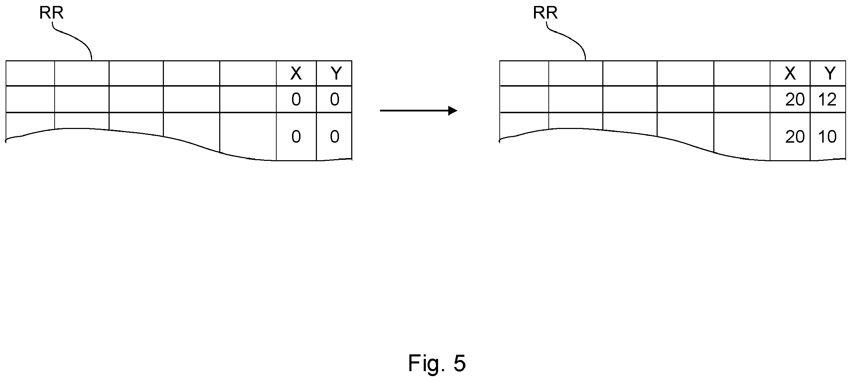

In figure 5 a post-processing step is displayed. After the preparation of the research result RR the number of hits of each of the terms can be for example counted. In the result of the post-processing in the right of figure 5, the term "X" is found twenty times in each of the documents. In the first document further the term "Y" is found twelve times and for the second line only ten times. This could lead to a possibility to prioritize or to give a certain hierarchy to each of the research results on the research result list RR.

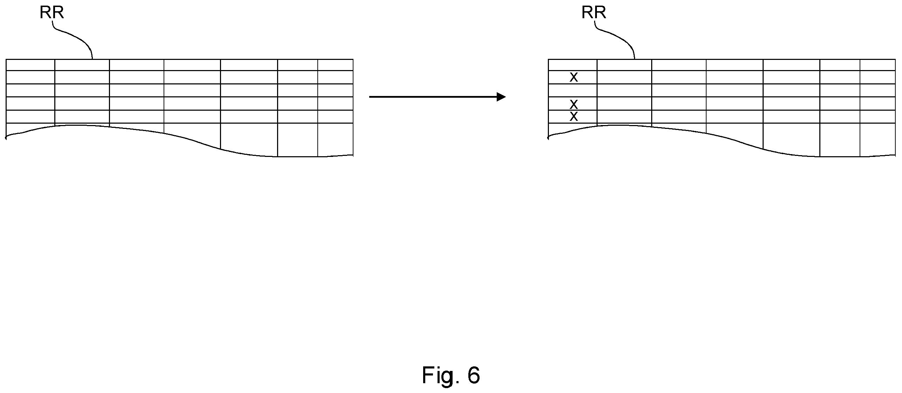

Figure 6 shows the possibility of carrying out a selection step. The selection can for example be done for a later on download step to download documents being part of the research result RR.

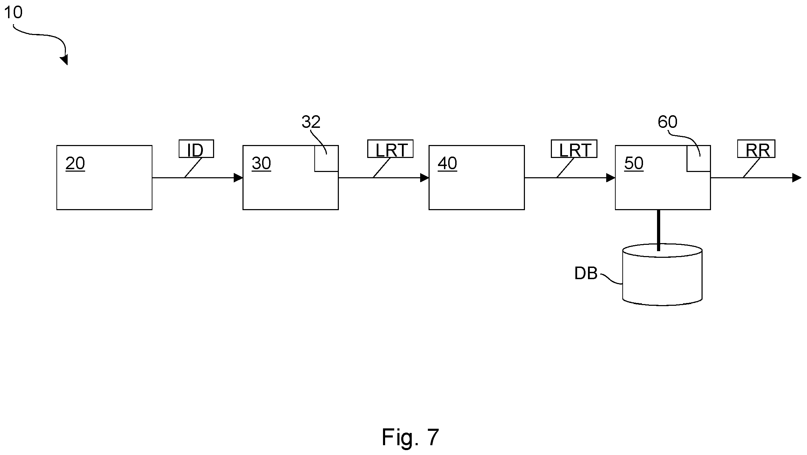

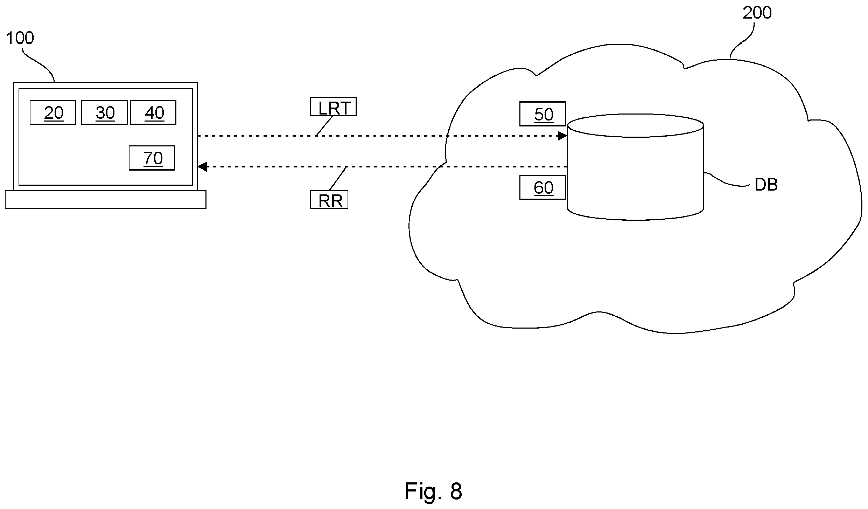

Figure 7 displays a research system 10 according to the present invention. At this place the modules in particular an input module 20, a pre-processing module 30 with pre-processing means 32, a sending module 40, and a conducting module 50. The preparing module 60 prepares the research result RR. Of course, according to figure 8, such a research system 10 can be separated into a local device 100 as well as the network device 200. According to the embodiment of figure 8, the parts in form of the input module 20, the pre-processing module 30 and the sending module 40 are provided in the local device 100. Thereby producing and sending the list of research terms LRT to a centralized data base DB of a network device 200. The conducting module 50 as well as a preparing module 60 can be comprised in the network device 200. To have an additional possibility to send back and display the research results RR on the local device 100 this local device 100 comprises an additional receiving module 70 of the research system 10.

The aforesaid description of the embodiments describes the present invention only by the way of examples.

### Reference signs

- 10: Research system
- 20: input module
- 30: pre-processing module
- 32: pre-processing means
- 40: sending module
- 50: conducting module
- 60: preparing module
- 70: receiving module

- 100: local device
- 200: network device

- ID: input document
- TP: text portion
- DB: database
- LRT: list of research terms
- CT: column of terms
- RR: research result

## Claims

1. Method to carry out a research in a database (DB) based on an input document (ID), comprising the following steps:
- Providing an input document (ID) with at least one text portion (TP),
- Pre-processing the provided input document (ID) to generate a list of research terms (LRT) based on the at least one text portion (TP),
- Sending the generated list of research terms (LRT) to the database (DB),
- Conducting the research in the database (DB) with the sent list of research terms (LRT),
- Preparing a research result (RR) based on the conducted research.

2. Method according to claim 1, **characterised in that** at least the pre-processing step is carried out on a local device (100).

3. Method according to any of the preceding claims, **characterised in that** at least the step of conducting the research is carried out on a network device (200) comprising the database (DB).

4. Method according to any of the preceding claims, **characterised in that** the prepared research result (RR) is send back from the database (DB) to a local device (100).

5. Method according to any of the preceding claims, **characterised in that** the step of pre-processing is non-reversible.

6. Method according to any of the preceding claims, **characterised in that** the generated list of research terms (LRT) is re-sorted before sending it to the database (DB).

7. Method according to any of the preceding claims, **characterised in that** the generated list of research terms (LRT) is encrypted before sending it to the database (DB).

8. Method according to any of the preceding claims, **characterised in that** the list of research terms (LRT) comprises at least two columns of terms (CT).

9. Method according to any of the preceding claims, **characterised in that** the pre-processing step comprises the possibility of repeated usage of terms for the generation of the list of research terms (LTR).

10. Method according to any of the preceding claims, **characterised in that** the pre-processing step comprises a consideration of a sequence of terms for the generation of the list of research terms (LRT).

11. Method according to any of the preceding claims, **characterised in that** a post-processing step is carried out on the prepared research result (RR).

12. Method according to any of the preceding claims, **characterised in that** after the preparation of the research result (RR) a selection step is carried out for selecting specific portions of the research result (RR) to be downloaded from the database (DB).

13. A computer program product comprising instructions which, when the program is executed by a computer, cause the computer to carry out the steps of one of claims 1 to 12.

14. Pre-processing module (30) to be used in a method according to any of claims 1 to 12, comprising pre-processing means (32) to generate the list of research terms (LRT) based on the at least one text portion (TP) of the input document (ID).

15. Research system (10) to carry out a research in a database (DB) based on an input document (ID), comprising an input module (20) for providing the input document (ID) with at least one text portion (TP), a pre-processing module (30) for pre-processing the provided input document (ID) to generate a list of research terms (LRT) based on the at least one text portion (TP), a sending module (40) for sending the generated list of research terms (LRT) to the database (DB), a conducting module (50) for conducting the research in the database (DB) with the sent list of research terms (LRT) and a preparing module (60) for preparing a research result (RR) based on the conducted research, wherein the input module (20), the pre-processing module (30), the sending module (40), the conducting module (50) and/or the preparing module (60) are in particular configured to carry out a method according to any of claims 1 to 12.
